# EUROPÄISCHE PATENTSCHRIFT

(11) **EP 1 017 952 B1**
(45) Veröffentlichungstag und Bekanntmachung des Hinweises auf die Patenterteilung: **20.08.2003**
(21) Anmeldenummer: 99934629.9
(22) Anmeldetag: 08.07.1999
(51) Int. Cl.: F16N 7/34

(54) **VORRICHTUNG ZUR ERZEUGUNG EINES SCHMIERMITTELNEBELS IN EINER DRUCKLUFTLEITUNG**
DEVICE FOR PRODUCING A LUBRICANT MIST IN A COMPRESSED AIR LINE
DISPOSITIF DE PRODUCTION D'UN BROUILLARD LUBRIFIANT DANS UNE CONDUITE D'AIR COMPRIME

(30) Priorität: 28.07.1998 DE 29813400 U
(43) Veröffentlichungstag der Anmeldung: 12.07.2000
(73) Patentinhaber: J. Lorch Ges. & Co. KG, D-71111 Waldenbuch (DE)
(72) Erfinder: KÜTHER, Ludwig, D-71111 Waldenbuch (DE)
(74) Vertreter: Steimle, Josef, Dipl.-Ing.
(86) Internationale Anmeldenummer: EP9904795
(87) Internationale Veröffentlichungsnummer: WO00006939

(56) Entgegenhaltungen:
- EP-A- 0 237 606
- DE-A- 1 601 474
- DE-A- 2 142 613
- FR-A- 2 547 644
- US-A- 3 703 940

## Beschreibung

Die Erfindung betrifft eine Vorrichtung zur Erzeugung eines Schmiermittelnebels in einer Druckluftleitung mit einem Luftdurchgangskanal eines Gehäuses, einem den freien Durchflußquerschnitt in Abhängigkeit der Druckdifferenz zwischen Einlaß und Auslaß des Luftdurchgangskanals mittels einer Steuerklappe verändernden Regulierventil, insbesondere einem Proportionalventil, einem Schmiermittelvorratsbehälter der über ein einen Ventilkörper aufweisendes Füllventil mit dem Einlaß des Luftdurchgangskanals und über eine Ölsaugleitung und einen Ölzerstäuber mit dem Auslaß verbunden ist, wobei das Füllventil bei einer Druckdifferenz größer etwa 1 bar schließt. Bei dier Anordnung liegen das Regulier- und das Füllventil relativ nah bei einander.

Bei einer solchen aus der DE-OS 16 01 474 bekannten Vorrichtung ist im Luftdurchgangskanal eine gegen Federkraft schwenkbare Klappe vorgesehen. Weiter ist unterhalb des Luftdurchkanals im Gehäuse das Füllventil vorgesehen. Durch die vielen Einzelteile ist die Montage und Wartung aufwendig.

Aus der DE-PS 21 42 613 ist eine weitere Vorrichtung bekannt, bei der die Steuerklappe des Regulierventils durch eine gummielastische Zunge gebildet wird, die sich in Abhängigkeit von der Druckdifferenz zwischen Einlaß und Auslaß durchbiegt und so den freien Durchflußquerschnitt verändert. Ein Füllventil ist dort nicht offenbart, so daß zum Ölnachfüllen die Vorrichtung stillgesetzt werden muß.

In Vermeidung der geschilderten Nachteile liegt der vorliegenden Erfindung die Aufgabe zugrunde, eine Vorrichtung der eingangs genannten Art so weiterzubilden, daß mit wenigen, einfach zu montierenden Teilen, bei sicherer Funktion ein geringes Konstruktionsgewicht erreicht wird.

Zur Lösung dieser Aufgabe sieht die Erfindung vor, daß die Steuerklappe des Regulierventils und der Ventilkörper des Püllventils einstückig ausgebildet sind und aus elastischem Material vorzugsweise gummielastischem Material bestehen.

Dadurch sind bei einfacher Montage nur wenige, einfach und billig herstellbare Teile erforderlich.

Der Herstellungsaufwand wird besonders gering, wenn die Steuerklappe und der Ventilkörper voneinander funktionsmäßig unabhängige Zungen sind die über einen Trägerkörper miteinander verbunden und gehalten sind. Durch die einstückige Ausbildung ist eine wesentliche Teileeinsparung erzielt, durch die auch eine automatische Montage sehr erleichtert ist.

Aufwendige Gehäusebohrungen können dadurch eingespart werden, daß der Trägerkörper im Bereich über der Steuerklappe und in Luftdurchströmrichtung dahinter einen den Ölzerstäuber abgebenden Durchbruch aufweist. Durch eine Flatterbewegung der im Luftstrom schwingenden Steuerklappe erfolgt eine hervorragende Ölvernebelung.

Eine weitere Einsparung von Konstruktionsteilen wird dadurch erreicht, daß das ober Ende des den Ölzerstäuber bildenden Durchbruchs als Tropftrichter ausgebildet, Teil des Trägerkörpers ist.

Weiter kann der Trägerkörper einen umlaufenden Randvorsprung aufweisen, der über einen eine Tropfkammer mindestens teilweise bildenden Kopf mit dem Gehäuse verspannt ist. Der Randvorsprung wirkt so, nachdem er aus elastisch nachgiebigem Material besteht, gleichzeitig als Dichtung, so daß sich weitere Maßnahmen für die Abdichtung erübrigen und auch keine zusätzlichen Befestigungsmittel erforderlich sind.

Weitere Teile sparend kann das Füllventil durch den als flexible Zunge ausgebildeten Ventilkörper und eine Mündung eines den Luftdurchgangskanal mit dem Schmiermittelvorratsbehälter verbindenden Gehäusedurchgang gebildet sein, wobei der Ventilkörper diese Mündung bei einer größeren Druckdifferenz (größer etwa 1 bar) zwischen Luftdurchgangskanal und Ölbehälterinnenraum schließt.

Die Montage wird besonders einfach, wenn der Luftdurchgangskanal im Bereich der Steuerklappe 2 parallele Wände aufweist und die zungenartig ausgebildete Steuerklappe zwischen diesen Wänden, der Druckdifferenz entsprechend, sich durchbiegt und den Durchflußquerschnitt mehr oder weniger freigibt.

Eine kompakte Bauweise wird dadurch ermöglicht, daß das Füllventil in Luftdurchströmrichtung, seitlich neben dem Regulierventil, im Gehäuse angeordnet ist und etwa gegenüberliegend auf der anderen Seite die Saugleitung durch das Gehäuse geführt ist.

Weitere erfindungsgemäße Ausbildungen sind den Unteransprüchen zu entnehmen und werden mit ihren Vorteilen anhand der beigefügten Zeichnungen in der nachstehenden Beschreibung näher erläutert. Es zeigt:

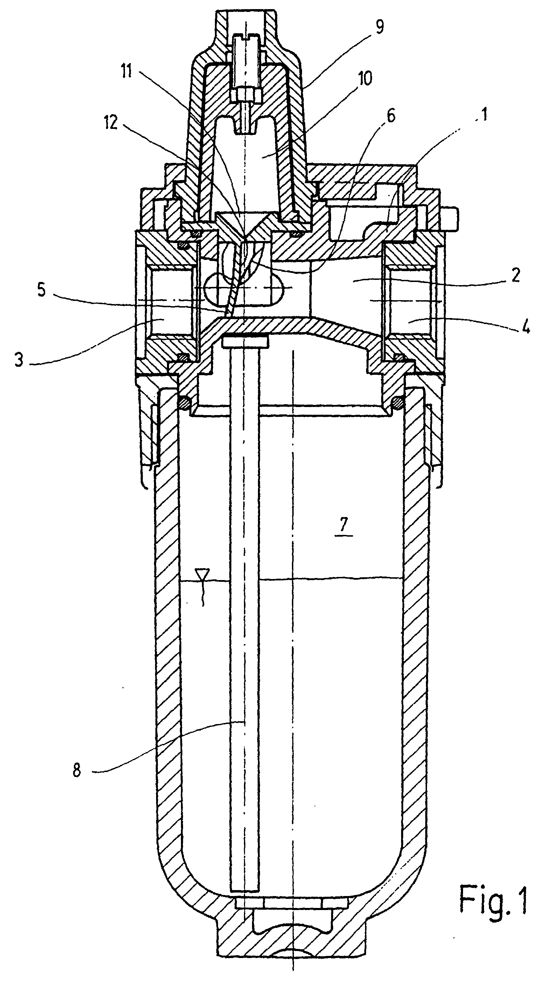

- Figur 1: einen Teilquerschnitt durch eine Vorrichtung zur Erzeugung eines Schmiermittelnebels in der Durchflußebene des Lufstroms;
- Figur 2: einen entsprechenden Querschnitt senkrecht zur Durchströmrichtung;
- Figur 3: einen Querschnitt durch den Luftdurchgangskanal in größerem Maßtab; und
- Figur 4: einen zur Figur 3 parallelen Schnitt durch das Füllventil.

Die Vorrichtung zur Erzeugung eines Schmiermittelnebels in einer Druckluftleitung weist ein, vorzugsweise aus Kunststoff hergestelltes, Gehäuse 1 mit einem venturiartig ausgebildeten Luftdurchgangskanal 2 auf, zwischen dessen Einlaß 3 und Auslaß 4 ein Regulierventil 5 angeordnet ist.

Seitlich neben dem Regulierventil 5 ist im Gehäuse 1 ein Füllventil 6 vorgesehen durch das der Einlaß 3 mit einem unten am Gehäuse 1 angeordneten Schmiermittelvorratsbehälter 7 verbunden ist.

Der Schmiermittelvorratsbehälter 7 ist über ein tief in ihn eintauchendes Steigrohr 8 (Teil einer Ölsaugleitung) durch das Gehäuse 1 hindurch mit einer von einem Kopf 9 umschlossenen Tropfkammer 10 verbunden. Das über einen Tropftrichter 11 aufgefangene Öl wird über eine als Ölzerstäuber 12 wirkende Bohrung hinter dem Regulierventil 5 in den Luftdurchgangskanal 2 geführt und vernebelt.

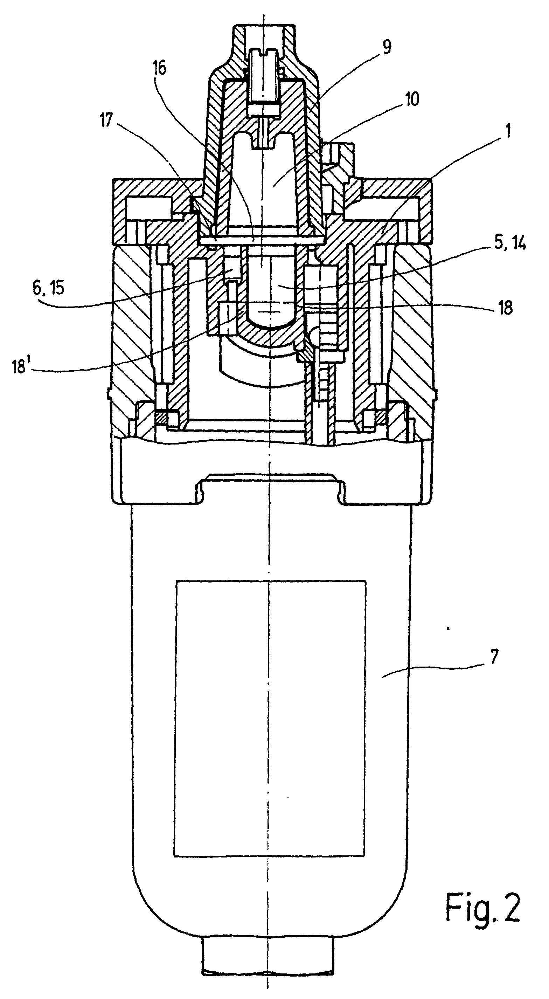

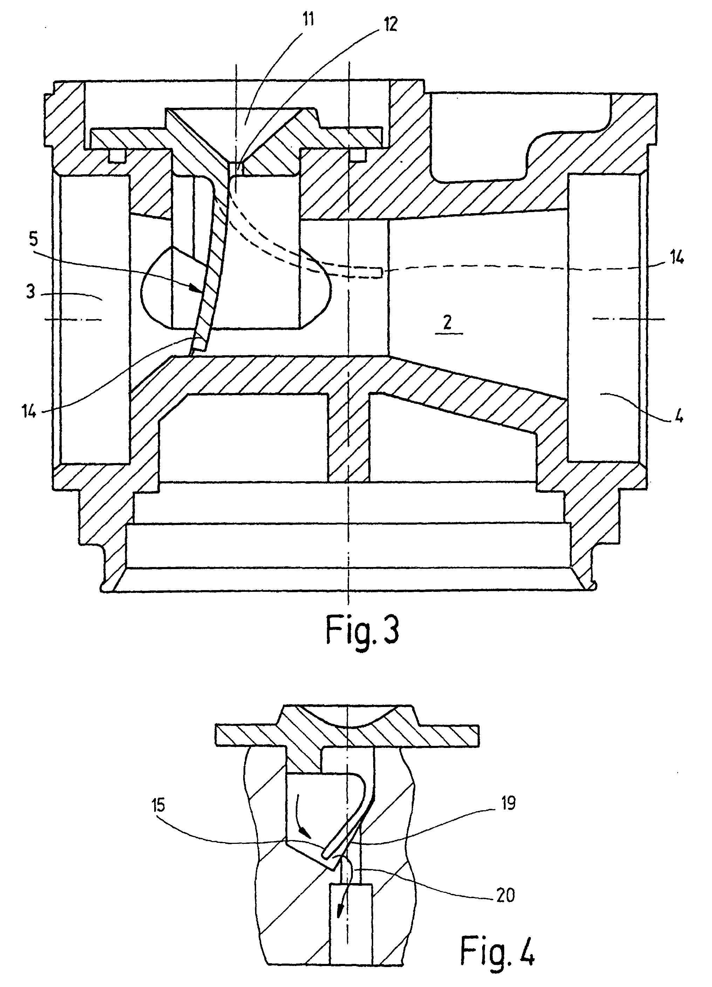

Wie in Figur 2 besonders gut ersichtlich sind das Regulierventil 5 und das Füllventil 6 nebeneinander angeordnet. Das Regulierventil 5 weist eine zungenförmige, aus elastischem Material bestehende, Steuerklappe 14 (Figur 3) auf und das Füllventil 6 einen ähnlich ausgebildeten Ventilkörper 15 (Figur 4). Der Ventilkörper 15 und die Steuerklappe 14 sind einstückig über einen Trägerkörper 16 miteinander verbunden, wobei der Trägerkörper 16 noch, vorzugsweise kreisrund, einen Randvorsprung 17 aufweist, der zwischen dem Gehäuse 1 und dem Kopf 9 dicht eingespannt gehalten ist.

Der Luftdurchgangskanal 2 weist im Bereich des Regulierventils 5 parallele Wände 18, 18' auf, zwischen denen die zungenförmige Steuerklappe 14 hineinragt und ausschwingen kann.

Infolge eine Druckdifferenz zwischen Einlaß 3 und Auslaß 4 erfolgt eine Durchströmung des Luftdürchgangskanals 2, wobei je größer die Druckdifferenz ist, umso mehr sich die Steuerklappe 14 durchbiegt, wobei der freie Durchflußquerschnitt sich ändert (Figur 3, gestrichelt eingezeichnet).

Das Füllventil 6 wird durch eine Mündung 19 eines Gehäusedurchgangs 20 und den zungenartig federnd ausgebildeten Ventilkörper 15 gebildet, wobei die Mündung 19, wie aus Figur 4 ersichtlich ist, im Winkel zur Achse des Gehäusedurchgangs 20 angeordnet ist. Im Betriebszustand verläuft der zungenartige Ventilkörper 15 unter kleinem Winkel zur Mündung 19. Wird nun zur Ergänzung des Ölvorrats der Schmiermittelvorratsbehälter 7 abgenommen, so fällt der Druck im Gehäusedurchgang 20 steil ab und es wird durch den Betriebsdruck der Ventilkörper 15 gegen die Mündung 19 gepresst und verschließt diese, so daß die Vorrichtung weiter unter normalem Betriebsdruck stehen kann. Irgendwelche Absperrungen für ein Ölnachfüllen sind nicht erforderlich.

## Patentansprüche

1. Vorrichtung zur Erzeugung eines Schmiermittelnebels in einer Druckluftleitung mit einem Luftdurchgangskanal (2) eines Gehäuses (1), einem den freien Durchflußquerschnitt in Abhängigkeit der Druckdifferenz zwischen Einlaß (3) und Auslaß (4) des Luftdurchgangkanals (2) mittels einer Steuerklappe (14) veränderbaren Regulierventil (5), insbesondere einem Proportionalventil, einem Schmiermittelvorratsbehälter (7), der über ein einen Ventilkörper (15) aufweisendes Füllventil (6) mit dem Einlaß (3) des Luftdurchgangskanals (2) und über eine Ansaugleitung, z.B. Steigrohr 8, und einen Ölzerstäuber (12) mit dem Auslaß (4) verbunden ist, wobei das Füllventil (6) bei einer Druckdifferenz größer etwa 1 bar schließt, wobei das Regulierventil (5) und das Füllventil (6) räumlich nahe beieinander angeordnet sind, **dadurch gekennzeichnet, daß** die Steuerklappe (14) des Regulierventils (5) und der Ventilkörper (15) des Füllventils (6) einstückig ausgebildet sind und aus elastischem Material bestehen.

2. Vorrichtung nach Anspruch 1, **dadurch gekennzeichnet, daß** die Steuerklappe (14) und der Ventilkörper (15) voneinander funktionsunabhängige Zungen sind, die über einen Trägerkörper (16) miteinander verbunden und gehalten sind.

3. Vorrichtung nach Anspruch 2, **dadurch gekennzeichnet, daß** der Trägerkörper (16) im Bereich über der Steuerklappe (14) und in Luftdurchströmrichtung dahinter einen den Ölzerstäuber (12) abgebenden Durchbruch (12') aufweist.

4. Vorrichtung nach Anspruch 2 oder 3, **dadurch gekennzeichnet, daß** das obere Ende des den Ölzerstäuber (12) bildenden Durchbruchs (12') als Tropftrichter (11) ausgebildet, Teil des Trägerkörpers (16) ist.

5. Vorrichtung nach einem der Ansprüche 2 bis 4, **dadurch gekennzeichnet, daß** der Trägerkörper (16) einen umlaufenden Randvorsprung (17) aufweist, der über einen eine Tropfkammer (10) mindestens teilweise bildenden Kopf (9) mit dem Gehäuse verspannt ist.

6. Vorrichtung nach Anspruch 1 oder 2, **dadurch gekennzeichnet, daß** das Füllventil (6) durch den, als flexible Zunge ausgebildeten, Ventilkörper (15) und eine Mündung (19) eines den Luftdurchgangskanal (2) mit dem Schmiermittelvorratsbehälter (7) verbindenden Gehäusedurchgang (20) gebildet ist, wobei der Ventilkörper (15) diese Mündung (19) bei einer größeren Druckdifferenz zwischen Luftdurchgangskanal (2) und Ölbehälterinnenraum verschließt.

7. Vorrichtung nach Anspruch 1, **dadurch gekennzeichnet, daß** der Luftdurchgangskanal (2) im Bereich der Steuerklappe (14) zwei parallele Wände (18, 18') aufweist und die zungenartig ausgebildete Steuerklappe (14) zwischen diesen Wänden (18, 18') der Unterdruckdifferenz entsprechend sich durchbiegt und den Durchflußquerschnitt mehr oder weniger freigibt.

8. Vorrichtung nach Anspruch 7, **dadurch gekennzeichnet, daß** das Füllventil (6) in Luftdurchströmrichtung seitlich neben dem Regulierventil (5) im Gehäuse 1 angeordnet ist und etwa gegenüberliegend auf der anderen Seite die Saugleitung (8) durch das Gehäuse (1) geführt ist.

## Claims

1. A device for generating a lubricant spray in a compressed air line, comprising an air passage channel (2) of a housing (1), a regulating valve (5), in particular a proportional valve, for changing the free cross-section of passage in dependence upon the pressure difference between inlet (3) and outlet (4) of the air passage channel (2) by means of a control flap (14), a lubricant supply container (7) connected to the inlet (3) of the air passage channel (2) via a filling valve (6), comprising a valve body (15), and connected to the outlet (4) via an oil suction line, e.g. a rising pipe (8), and an oil sprayer (12), wherein the filling valve (6) closes at a pressure difference of more than 1 bar and wherein the regulating valve (5) and the filling valve (6) are disposed very close to each other, **characterized in that** the control flap (14) of the regulating valve (5) and the valve body (15) of the filling valve (6) are produced from a single piece of elastic material.

2. The device according to claim 1, **characterized in that** said control flap (14) and said valve body (15) are independently functioning tongues connected to each other and borne by a support body (16).

3. The device according to claim 2, **characterized in that** said lubricant atomizer (12) has an opening (12') in said support body (16) disposed above and downstream of said control flap (14).

4. The device according to claim 2 or 3, **characterized in that** the upper end of said opening (12') forming said lubricant atomizer (12) is shaped as a drip funnel (11) and as a part of said support body (16).

5. The device according to one of claim 2 to 4, **characterized in that** said support body (16) comprising a peripheral edge projection (17) securely borne in said head said housing via a head (9) defining a drip chamber (10).

6. The device according to claim 1 or 2, **characterized in that** said filling valve (6) is constructed by the valve body (15), which is designed as a flexible tongue, and an opening (19) of a housing passage (20), connecting said air passage channel (2) with the lubricant supply container (7), wherein said valve body (15) closes said opening (19) at increased pressure differences between said air passage channel (2) and an inside of said lubricant supply container.

7. The device according to claim 1, **characterized in that** air passage channel (2) comprises two parallel walls (18, 18') proximate said control flap (14), said control flap (14) shaped as a tongue, bending between said walls (18, 18') in dependence on a partial negative pressure difference to open said passage to a greater and lesser extent.

8. The device according to claim 7, **characterized in that** said filling valve (7) is disposed in said housing (1) at a side of said regulating valve (5) transverse to an air flow direction and said suction line (8) is guided through said housing (1) at the other opposite side.

## Revendications

1. Dispositif de production d'un brouillard lubrifiant dans une conduite d'air comprimé comportant un canal de passage d'air (2) à travers un carter (1), une valve de réglage (5), notamment une valve proportionnelle, qui modifie la section de libre écoulement au moyen d'un clapet de commande (14) en fonction de la différence de pression entre l'entrée (3) et la sortie (4) du canal de passage d'air (2), un réservoir à lubrifiant (7) relié à l'entrée (3) du canal de passage d'air (2) par une valve de remplissage (6) comportant un corps de valve (15) et relié à la sortie (4) par un conduit d'aspiration, par exemple un tube plongeur (8), et par un pulvérisateur d'huile (12), la valve de remplissage (6) se fermant lorsque la différence de pression est supérieure à 1 bar environ, la valve de réglage (5) et la valve de remplissage (6) étant proches spatialement, **caractérisé en ce que** le clapet de commande (14) de la valve de réglage (5) et le corps de valve (15) de la valve de remplissage (6) sont réalisés d'un seul tenant dans un matériau élastique.

2. Dispositif selon la revendication 1, **caractérisé en ce que** le clapet de commande (14) et le corps de valve (15) sont des languettes qui fonctionnent indépendamment l'une de l'autre et sont reliées et maintenues ensemble par un élément support (16).

3. Dispositif selon la revendication 2, **caractérisé en ce que** l'élément support (16) présente, dans la zone située au-dessus du clapet de commande (14) et derrière celui-ci dans le sens d'écoulement de l'air, une ouverture (12') faisant office de pulvérisateur d'huile (12).

4. Dispositif selon la revendication 2 ou 3, **caractérisé en ce que** l'extrémité supérieure de l'ouverture (12') formant pulvérisateur d'huile (12) se présente sous la forme d'un entonnoir de gouttage (11) intégré à l'élément support (16).

5. Dispositif selon l'une des revendications 2 à 4, **caractérisé en ce que** l'élément support (16) présente un rebord périphérique (17) qui est fixé au carter au moyen d'une tête (9) formant au moins en partie une chambre collectrice (10).

6. Dispositif selon la revendication 1 ou 2, **caractérisé en ce que** la valve de remplissage (6) est formée par le corps de valve (15) conçu sous la forme d'une languette flexible et par l'embouchure (19) d'un passage (20) pratiqué dans le carter pour relier le canal de passage d'air (2) au réservoir à lubrifiant (7), le corps de valve (15) obturant ladite embouchure (19) en présence d'une différence de pression relativement importante entre le canal de passage d'air (2) et l'intérieur du réservoir d'huile.

7. Dispositif selon la revendication 1, **caractérisé en ce que** le canal de passage d'air (2) présente, dans la zone du clapet de commande (14), deux parois parallèles (18, 18') et **en ce que** le clapet de commande (14) conçu sous la forme d'une languette se cintre entre ces parois (18, 18') en fonction de la différence de dépression, dégageant plus ou moins la section d'écoulement.

8. Dispositif selon la revendication 7, **caractérisé en ce que** la valve de remplissage (6) est agencée dans le carter (1) latéralement à la valve de réglage (5) dans le sens d'écoulement de l'air et **en ce que** le conduit d'aspiration (8) traverse le carter (1) de l'autre côté, sensiblement à l'opposé.
